# EUROPÄISCHE PATENTANMELDUNG

(11) **EP 3 959 966 A1**
(43) Veröffentlichungstag der Anmeldung: **02.03.2022**
(21) Anmeldenummer: 20193592.1
(22) Anmeldetag: 31.08.2020
(51) Int. Cl.: A01G 20/10, E01C 13/08

(54) **NATURFASERVERSTÄRKTER ROLLRASEN**

(71) Anmelder: Gebrüder Peiffer GbR Fertigrasen - Zuchtbetrieb, 47877 Willich (DE)
(72) Erfinder: Peiffer, Arnd, 47877 Willich (DE)
(74) Vertreter: Roth, Andy Stefan

(57) **Zusammenfassung**

Die vorliegende Technologie bezieht sich auf neue Hybridrasentragschichten zur Verwendung mit Naturrasen zur Bildung eines stabilen Hybridrollrasensystems sowie Hybridrollrasensysteme und Rollrasen umfassend solche Hybridrasentragschichten. Ferner betrifft die vorliegende Erfindung Verfahren zur Herstellung einer Hybridrasentragschicht sowie Verfahren zur Herstellung von Hybridrollrasen umfassend die erfindungsgemäße Hybridrasentragschicht.

## Beschreibung

Die vorliegende Erfindung betrifft neue Hybridrasentragschichten zur Verwendung mit Naturrasen zur Bildung eines stabilen Hybridrollrasensystems sowie Hybridrollrasensysteme und Rollrasen umfassend solche Hybridrasentragschichten. Ferner betrifft die vorliegende Erfindung Verfahren zur Herstellung einer Hybridrasentragschicht sowie Verfahren zur Herstellung von Hybridrollrasen umfassend die erfindungsgemäße Hybridrasentragschicht.

### Hintergrund der Erfindung

Naturrasenflächen bilden den optimalen Boden, um Sportarten wie Fußball, Hockey oder Reitsport auszuüben. Bei intensiver Nutzung von natürlichen Rasenflächen für derartige Sportarten kommt es schnell zu einem Verschleiß der Rasenflächen. Dieser Verschleiß kann so weit gehen, dass die Rasenflächen nicht mehr für sportliche Aktivitäten genutzt werden können. Es werden dann längere Pflege- und Regenerationsphasen für die Rasenflächen benötigt, während derer dort kein Sport betrieben werden kann, was zu hohen Wartungskosten und möglichen Verletzungen der Spieler führt. Längere Ausfallzeiten, bedingt durch den Verschleiß des Rasens, sind daher für Betreiber von Sportflächen unerwünscht.

Ein Ansatz dieser Problematik zu begegnen, ist die Verwendung von Kunstrasen, welcher aus synthetischen Stoffen aufgebaut ist und somit weniger schnell verschleißt Allerdings entspricht auch moderner Kunstrasen in seinem Verhalten bei der Ausführung der meisten Sportarten nicht dem Verhalten eines natürlichen Rasens. Somit ist Kunstrasen in vielen Fällen unbeliebt bei den Sportlern.

Eine andere Alternative zur Verbesserung der Verschleißfestigkeit von Rasenflächen ist der Einsatz von Hybridrasen. Bei Hybridrasen werden die Vorteile einer natürlichen Rasenfläche mit den Vorteilen einer Verstärkung durch synthetische Stoffe verknüpft. Bei solchen Hybridrasen wird auf dem vorhandenen Unterboden zunächst eine kunstfaserverstärkte Tragschicht aufgebracht. Die Kunstfasern in dieser Tragschicht haben die Aufgabe, die Scherfestigkeit der Schicht durch eine Vernetzung untereinander zu verbessern. Mechanische Belastungen bei der Ausführung der Sportarten werden somit besser abgefangen und verteilt als bei einem Boden, der nicht mit Fasern verstärkt ist Auf dieser Tragschicht wird dann Naturrasen angelegt Dabei können die Verstärkungsfasern der Tragschicht auch bis in den Naturrasen hinein verlaufen, was auch der Rasenschicht zusätzliche Stabilität verschafft Auch ein derartiger Hybridrasen bzw. dessen Tragschicht hat eine endliche Lebensdauer und muss nach einigen Jahren erneuert oder ausgetauscht werden. Die WO 2011051744 A1 beschreibt einen Rasen für Sport, Freizeitaktivitäten und / oder für Zierzwecke, der eine Matte aus flexiblem Material umfasst, die mit einer ersten Seite und einer zweiten Seite gegenüberliegend ausgestattet ist. Mit der Matte sind mehrere Fasern aus einem künstlichen Material derart verbunden, dass sie einen Kunstrasen bilden, der aus der ersten Fläche herausragt. Der Rasen umfasst ferner eine abgemessene Menge eines losen Füllmaterials, beispielsweise eines körnigen Typs, das auf der Oberfläche der Matte verteilt ist Der Rasen umfasst ferner natürliches Pflanzenmaterial, d. H. Pflanzen, die zu einer oder mehreren Pflanzenarten gehören, die durch Aussaat, Transplantation von Pflanzenteilen oder eine Kombination der beiden Lösungen in das lose Füllmaterial eingebracht wurden.

Bei der Entsorgung gebrauchter Hybridrasen stellt sich jedoch das Problem, dass die Kunstfasern untrennbar mit den mineralischen und organischen Bestandteilen von Rasen und Tragschicht vermischt sind. Daher fallen jährlich große Mengen an abgetragenem Material bei der Erneuerung von Hybridrasenflächen an, welche neben natürlichem Material auch einen großen Anteil an Kunststoffen enthalten. Derartiges, kunststoffhaltiges Material kann nicht in der Natur ausgebracht werden und muss daher umständlich und kostenaufwändig deponiert oder entsorgt werden.

Die EP 3130704 A1 beschreibt eine stationäre Tragschicht für Rasen, welche Bewehrungsfasern aus Kunststoff aufweist, wobei diese Bewehrungsfasern unter den Umgebungsbedingungen beim Einsatz als Tragschicht im Boden zumindest im Wesentlichen nicht biologisch abbaubar sind und wobei diese Bewehrungsfasern eine Aktivierungsschwelle aufweisen, oberhalb welcher die Bewehrungsfasern im Wesentlichen komplett biologisch abbaubar sind.

Die EP3276077 B1 beschreibt Verfahren zur stationären Bodenmischungsverfestigung zur Anpflanzung von Gras für Sportanwendungen, wobei die Bodenmischung Boden, Feinmaterial und natürliche Fasern umfasst. Der Anteil an Naturfasern beträgt dabei zwischen 0,6 und 3 Gewichts-% und die Schichtdicke der Bodenmischverfestigung liegt zwischen 10 und 30 cm.

Im Gegensatz zu stationär aufgezogenen Rasenflächen werden Roll- oder Fertigrasen meist auf einem sorgfältig vorbereiteten Mutterboden gezogen und anschließend dann mit Spezialmaschinen als Bänder oder Rasenstücke vom Boden abgeschält und es muss sichergestellt werden, dass der Rollrasen wie Hybridrollrasen beim Abschälen, Transport und Verlegen an der zu begrünenden Stelle nicht beschädigt wird, aber gleichzeitig auch transportabel bleibt.

Die Aufgabe der vorliegenden Erfindung ist es einen Hybridrollrasen zur Verfügung zu stellen, der die Entsorgung gebrauchter Tragschichten von Hybridrasen zu vereinfachen und gleichzeitig stabil und einfach in der Verlegung und Transport zu handhaben ist.

### Detaillierte Beschreibung der Erfindung

Beschrieben werden Hybridrasentragschichten zur Verwendung mit Naturrasen zur Bildung eines stabilen Hybridrollrasensystems (Hybridrollrasen), wobei die Hybridrasentragschicht eine Bodengrundsubstanz und eine Vielzahl von Naturfasern umfasst, wobei der Anteil der Naturfasern an der Hybridrasentragschicht zwischen 3 bis 10 Gewichts-% beträgt und die Schichtdicke der Hybridrasentragschicht zwischen 20 mm und 70 mm liegt

Die Aufgabe der Erfindung wird insbesondere dadurch gelöst, dass die Hybridrasentragschicht als Teil des späteren Hybridrollrasensystems und somit der gesamte Rollrasen einfach anzuziehen, gut zu transportieren und im Zielgebiet einfach zu verlegen ist, wobei der Hybridrollrasen nach Gebrauch biologisch abbaubar ist, aber gleichzeitig eine bessere Armierung und mehr Überlappungen des Fasermaterials aufweist und dadurch weniger Spielschäden und Durchtritte auftreten. Die Naturfasern erfüllen dabei ihre Aufgabe der mechanischen Stützung und Festigung des Hybridrollrasensystems über einen Zeitraum von mehreren Jahren zuverlässig. Die Naturfasern dienen dabei insbesondere der Verfestigung und der Verbesserung der Scherfestigkeit des Hybridrollrasensystems. Je höher diese Scherfestigkeit ist, desto höher ist die mögliche Nutzungsintensität des Hybridrasens und desto niedriger sind Pflegeaufwand und benötigte Regenerationszeit.

Nach der Entsorgung des erfindungsgemäßen Hybridrollrasensystems bleibt nach biologischem Abbau nur organisches und mineralisches Material, welches bedenkenlos in der Natur ausgebracht oder verteilt werden kann, zurück. Eine erfindungsgemäße Tragschicht bietet somit die sehr vorteilhafte Kombination aus qualitativ hochwertiger Stabilisierungsfunktion beim Einsatz in Hybridrollrasen mit einer deutlich vereinfachten und verbesserten Entsorgung nach ihrem Einsatz im Hybridrasen.

Ferner enthält die Hybridrasentragschicht der vorliegenden Erfindung zur Verwendung mit Naturrasen zur Bildung eines stabilen Hybridrollrasensystems eine Bodengrundsubstanz umfassend Boden, Sand und weiteren Zuschlagsstoffe aufweist. Diese Bodengrundsubstanz kann beispielsweise Quarzsand, Natursand, Lava, Oberboden, Torf oder Naturkork oder Gemische davon aufweisen.

In einer möglichen Ausführungsform der Erfindung enthält die Tragschicht als größten Bestandteil Quarzsand und/oder Natursand. Der Anteil dieser Sande beträgt dabei üblicherweise 60 - 80 Volumenprozent. Als besonders günstig haben sich dabei Korngrößen zwischen 0,02 mm und 4 mm herausgestellt Weiterhin kann Lava ein Bestandteil der Tragschicht sein. Üblicherweise wird Lava im Anteil von 0 - 18 Volumenprozent (Volumen-%) der Tragschicht beigemengt

Für den Anteil die Lavas wird ein Intervall angegeben, das durch eine obere und untere Grenze beschrieben ist. Als Obergrenze sind zum Beispiel dabei folgende Werte vorgesehen: 2, 4, 6, 8, 10, 12, 14, 16, 18, 20, 22 oder 25 Volumen-%. Als Untergrenze gelten zum Beispiel folgende Werte: 0,5, 1, 1,5, 2, 4, 6, 8, 10 oder 12 Volumen-%. Die Offenbarung dieser Anmeldung umfasstdie Menge von allen Intervallen, die durch alle mögliche, technisch richtigen Kombinationen der vorgenannten Ober- und Untergrenzen besteht Auch hier haben sich Korngrößen des Lavas zwischen 0,02 mm und 4 mm als besonders günstig herausgestellt Für die Korngröße des Lavas wird ein Intervall angegeben, das durch eine obere und untere Grenze beschrieben ist Als Obergrenze sind zum Beispiel dabei folgende Werte vorgesehen: 1, 1,5, 2, 2,5, 3, 3,5, 4, 5 oder 6mm. Als Untergrenze gelten zum Beispiel folgende Werte: 0,02, 0,05, 0,1, 0,15, 0,2, 0,3, 0,4, 0,5, 0,7, 0,85, 1, 1,3, 1,5, 1,7, 2, 2,5, 3 oder 4 mm.

Weiterer Bestandteil der Tragschicht, insbesondere zu einem Anteil von 5 - 20 Volumenprozent, ist Oberboden. Für den Anteil des Oberbodens wird ein Intervall angegeben, das durch eine obere und untere Grenze beschrieben ist. Als Obergrenze sind zum Beispiel dabei folgende Werte vorgesehen: 2, 4, 6, 8, 10, 12, 14, 16, 18, 20, 22, 25, 28 oder 30 Volumen-%. Als Untergrenze gelten zum Beispiel folgende Werte: 0,5, 1, 1,5, 2, 4, 6, 8, 10 oder 12 Volumen-%. Die Offenbarung dieser Anmeldung umfasst die Menge von allen Intervallen, die durch alle mögliche, technisch richtigen Kombinationen der vorgenannten Ober- und Untergrenzen besteht Geeigneter Oberboden für eine Tragschicht ist in der Norm DIN 18300 als Bodenklasse 1 als Oberboden bzw. Mutterboden definiert und enthält neben anorganischem Material auch Humus und Bodenlebewesen. Ebenfalls geeignet sind fließende Bodenarten, wie sie in der Norm DIN 18915 als Bodengruppe 2 klassifiziert sind.

Als weiterer geeigneter Bestandteil der Tragschicht hat sich Torf, idealerweise zu einem Anteil von 3 - 11 Volumenprozent (Volumen-%) ergeben. Erfahrungsgemäß gut einsetzbar ist dabei Hochmoortorf oder Weißfeintorf. Für den Anteil des Torfs wird ein Intervall angegeben, das durch eine obere und untere Grenze beschrieben ist. Als Obergrenze sind zum Beispiel dabei folgende Werte vorgesehen: 2, 4, 6, 8, 10, 11, 12 oder 13 Volumen-%. Als Untergrenze gelten zum Beispiel folgende Werte: 0,5, 1, 1,5, 2, 4, 6 oder 8 Volumen-%.

Weiterhin kann eine Tragschicht Naturkork, insbesondere in einer Korngröße zwischen 0,5 mm und 20 mm, bevorzugt zwischen 3 mm und 7 mm eingesetzt werden. Für die Korngröße des Naturkorks wird ein Intervall angegeben, das durch eine obere und untere Grenze beschrieben ist Als Obergrenze sind zum Beispiel dabei folgende Werte vorgesehen: 3, 5, 7, 10, 12, 15, 17 oder 20 mm. Als Untergrenze gelten zum Beispiel folgende Werte: 0,5, 1, 2, 3, 4, 5, 7, 10, 12 oder 15 mm. Je nach gewünschten Eigenschaften des Hybridrasens kann der Anteil des Naturkorks im Bereich von 0 - 13 Volumenprozent (Volumen-%) liegen. Für den Anteil des Naturkorks wird ein Intervall angegeben, das durch eine obere und untere Grenze beschrieben ist Als Obergrenze sind zum Beispiel dabei folgende Werte vorgesehen: 2, 4, 6, 8, 10, 12 oder 13 Volumen-%. Als Untergrenze gelten zum Beispiel folgende Werte: 0,5, 1, 1,5, 2, 4 oder 6 Volumen-%.

In einer bevorzugten Ausführungsform enthält die Hybridrasentragschicht eine Bodengrundsubstanz aus Oberboden, Sand und/oder Lava.

In einer bevorzugten Ausführungsform darf die Schichtdicke bzw. Einbaustärke der Hybridrasentragschicht nicht über zwischen 70 mm liegen. Besonders bevorzugt liegt die Schichtdicke bzw. Einbaustärke der Hybridrasentragschicht zwischen 20 mm und 70 mm, insbesondere zwischen 30 mm und 60 mm, besonders bevorzugt zwischen 30 mm bis 50 mm.

In einer weiteren bevorzugten Ausführungsform ist die Hybridrasentragschicht eine Hybridrasentragschicht nach DIN 18015.

Das Hybridrollrasensystem wird bevorzugt zunächst nicht beim Ort der späteren Verwendung, sondern in speziellen Anzuchtfeldern ausgebracht und dann als Rasen vorkultiviert. Nach ca. 12 bis 18 Monaten kann dann das Hybridrollrasensystem als Rollrasen-Dicksode geerntet werden und dann als fertiger, sofort bespielbarer Hybridrollrasen dort maschinell auf die vor Ort vorhandene Rasentragschicht/Boden verlegt werden.

Überaschenderweise können größere Schichtdicke bzw. als 70 mm, insbesondere als 50 mm sind nicht als Rollrasen geerntet werden. Ferner konnte überaschenderweise festgestellt werden, dass Faserarmierungen in Bereichen von 70 mm, insbesondere von 50 mm keinen bzw. nur wenig positiven Effekt haben und für laufende Pflegemaßnahmen sogar eher nachteilig sind.

Ferner enthält die Hybridrasentragschicht der vorliegenden Erfindung zur Verwendung mit Naturrasen zur Bildung eines stabilen Hybridrollrasensystems eine Vielzahl von Naturfasern ausgewählt aus der Gruppe bestehend aus Kokos, Kenaf, Bagasse und Bambus, oder Gemische davon, wobei der Anteil der Naturfasern an der Hybridrasentragschicht zwischen 3 bis 10 Gewichts-%, insbesondere zwischen 3 bis 8 Gewichts-% beträgt.

In einer bevorzugten Ausführungsform beträgt der Anteil der Naturfasern an der Hybridrasentragschicht zwischen 3 und 8 Gewichts-%, insbesondere sollte der Anteil der Naturfasern in der Hybridrasentragschicht 3 Gewichts-% nicht unterschreiten. Dadurch erhält die Hybridrasentragschicht in dem Rollrasen eine bessere Armierung, mehr Überlappungen des Fasermaterials und dadurch weniger Spielschäden und Durchtritte.

In einer bevorzugten Ausführungsform enthält die erfindungsgemäße Hybridrasentragschicht zu keinem Zeitpunkt nicht biologisch abbaubaren Fasern, insbesondere keine Fasern aus Kunststoff, auch wenn diese durch Aktivierung später biologisch abgebaut werden können.

Vorteilhafter Weise ist vorgesehen, dass die Länge der Naturfasern zwischen 15 mm und 700 mm, insbesondere zwischen 30 mm und 500 mm beträgt Auch die Länge der Naturfasern hat Einfluss auf die erzielte Scherfestigkeit der Hybridrasentragschicht. Bei der Auswahl einer Länge für die Naturfasern spielt es eine Rolle, auf welche Art die Fasern in die Hybridrasentragschicht eingebracht werden. Werden die Fasern vor der Aufbringung des Hybridrasens der Hybridrasentragschicht untergemischt, können andere Faserlängen optimal sein als bei nachträglicher Einbringung der Naturfasern in einen bereits verlegten Rasen bzw. eine bereits verlegte Tragschicht. Besonders günstige Ergebnisse lassen sich mit Naturfasern mit einer Länge zwischen 30 mm und 500 mm erzielen. Eine gute Scherfestigkeit wird auch im Bereich zwischen 15 mm und 700 mm erzielt. Darüber hinaus sind allerdings auch größere oder kleinere Längen der Naturfasern mit zur Erfindung gehörend. Für die Länge der Naturfasern wird ein Intervall angegeben, das durch eine obere und untere Grenze beschrieben ist. Als Obergrenze sind zum Beispiel dabei folgende Werte vorgesehen: 90mm, 100 mm, 150 mm, 250 mm, 300 mm, 350 mm, 400 mm, 450 mm, 500 mm, 550 mm, 600 mm, 650 mm und 700 mm. Als Untergrenze gelten zum Beispiel folgende Werte: 15 mm, 30 mm, 45 mm, 60 mm, 75 mm und 100 mm.

Bei einer bevorzugten Ausgestaltung des Vorschlags ist vorgesehen, dass die Dicke der Naturfasern zwischen 0,05 mm und 2 mm, insbesondere zwischen 0,1 mm und 1 mm beträgt Auch die Dicke der Naturfasern hat Einfluss auf die mechanische Festigkeit der Hybridrasentragschicht und damit des Hybridrasens. Besonders günstige Ergebnisse haben sich bei einer Dicke der Naturfasern zwischen 0,1 mm und 1 mm gezeigt. Allerdings zeigen sich auch im Bereich zwischen 0,05 mm und 2 mm für die Dicke der Naturfasern sehr gute Ergebnisse. Darüber hinaus sind auch größere oder kleinere Dicken der Naturfasern mit der Erfindung offenbart Für die Dicke der Naturfasern wird ein Intervall angegeben, das durch eine obere und untere Grenze beschrieben ist Als Obergrenze sind zum Beispiel dabei folgende Werte vorgesehen: 1 mm, 1,5 mm, 2 mm, 2,5 mm und 3 mm. Als Untergrenze gelten zum Beispiel folgende Werte: 0,05 mm, 0,1 mm, 0,2 mm, 0,4 mm und 0,6 mm. Die Offenbarung dieser Anmeldung umfasst die Menge von allen Intervallen, die durch alle möglichen, technisch sinnvollen Kombinationen der vorgenannten Ober- und Untergrenzen besteht

Bei einer bevorzugten Ausgestaltung der vorliegenden Erfindung liegen die Naturfasern innerhalb der Hybridrasentragschicht in unterschiedlichen Richtungen vor, sind ungeordnet verteilt und zumindest besteht teilweise eine Verzahnung zwischen den einzelnen Naturfasern. In dieser Ausführungsform der Erfindung liegen die Naturfasern innerhalb der Tragschicht ungeordnet vor. Das bedeutet, dass es keine bevorzugte oder bewusst eingestellte Richtung gibt, in der die Fasern verlaufen. Zwischen den einzelnen ungeordnet verteilt vorliegenden Fasern kommt es dabei zumindest teilweise zu einer Verzahnung der einzelnen Naturfasern untereinander. Die Fasern berühren sich gegenseitig, haken ineinander ein oder sind teilweise umeinander gewickelt. Dadurch entsteht eine Interaktion zwischen den einzelnen Fasern, welche einer Art Vernetzung entspricht Diese Vernetzung oder Verzahnung sorgt für die gewünschte Verbesserung der Scherfestigkeit der Hybridrasentragschicht. Durch die verbesserte Scherfestigkeit wiederum kann der Hybridrasen deutlich intensiver genutzt werden, ohne stark zu verschleißen und benötigt dabei geringere Regenerationszeiten. Ein derartiges ungeordnetes Vorliegen der Naturfasern in der Tragschicht kann beispielsweise dadurch erzeugt werden, dass die Fasern vor der Aufbringung der Hybridrasentragschicht auf dem Boden mit den anderen Bestandteilen der Hybridrasentragschicht vermischt werden. Die so mit Naturfasern vermischte Hybridrasentragschicht wird anschließend auf den Boden der Anzuchtstätte aufgebracht und als oberste Schicht der Naturrasen angelegt Die ungeordnet vorliegenden Naturfasern in der Hybridrasentragschicht haben sich als besonders günstig zur Stabilisierung der Wurzelzone des Naturrasens herausgestellt. Selbstverständlich ist es auch zur Erfindung gehörend, dass Naturfasern in einen bereits angelegten Rasenaufbau nachträglich in ungeordneter Richtung eingebracht werden.

Die vorliegende Erfindung bezieht sich ferner auf Verfahren zur Herstellung einer zuvor beschriebenen Hybridrasentragschicht umfassend die Verfahrensschritte:
(a) Herstellen einer Hybridrasentragschicht umfassend Boden, Sand und weitere Zuschlagsstoffe;
(b) Homogenes vermischen der Hybridrasentragschicht aus Schritt a) mit einer Vielzahl von Naturfasern ausgewählt aus der Gruppe bestehend aus Kokos, Kenaf, Bagasse und Bambus, oder Gemische davon, wobei insbesondere der Anteil der Naturfasern an der Hybridrasentragschicht zwischen 1 bis 10 Gewichts-%, insbesondere zwischen 3 bis 8 Gewichts-% beträgt und wobei die Schichtdicke der Hybridrasentragschicht zwischen 20 mm und 70 mm, insbesondere zwischen 30 mm und 60 mm, bevorzugt zwischen 30 mm bis 50 mm liegt.

Die Hybridrasentragschicht wird bevorzugt durch ständigen Einsatz des Zwangsmischers und der dosierten Beigabe der Inhaltsstoffe hergestellt. Zuerst wird die Bodengrundsubstanz beispielsweise aus Oberboden, Sand und/oder Lava gemäß DIN 18035 hergestellt Anschließend erfolgt während des Mischprozesses die Zugabe der Naturfasern wie Kokos, Kenaf, Bagasse und Bambus, oder Gemischen davon. Wenn eine homogene Durchmischung erreicht ist, wird das Material für den Einbau auf Miete gesetzt Der Einbau in die Aufzuchtfelder erfolgt dann mit Spezialmaschinen, bei denen das Material in einem Arbeitsgang auf das bereits fertiggestellte Planum in einer Stärke von 20 mm bis 70 mm, insbesondere zwischen 30 mm bis 60 mm, bevorzugt zwischen 30 mm bis 50 mm aufgebracht wird. Anschließend wird auf dem ausgebrachten Material noch eine Feinplanie für das Saatbett hergestellt In dieses Saatbett wird dann eine Sportrasenmischung, beispielsweise aus *Lolium perenne* und *Poa pratensis* bzw. reiner *Poa pratensis* eingesät.

Das Hybridrollrasensystem wird dann als Hybridrollrasen vorkultiviert. Nach ca. 12 bis 18 Monaten kann dann dieses Material als Rollrasen-Dicksode geerntet werden und dann als fertiger, sofort bespielbarer Rasen dort maschinell auf die vor Ort vorhandene Rasentragschicht/Boden verlegt werden.

In einer besonderen Ausführungsform wird der erfindungsgemäße Hybridrollrasen mit folgendem Verfahren hergestellt:
a) Erzeugen einer Hybridrasentragschicht gemäß der vorliegenden Erfindung,
b) Gleichmäßiges Ausbringen der Hybridrasentragschicht in gleichmäßiger Stärke und einplanieren auf einer Schicht aus Sand oder Erde oder einer Mischung davon;
c) Hinzufügen von Naturrasensamen wie Naturgrassamen, einer Sportrasensamenmischung und/oder einer Wiesenrispeneinsaat auf die Oberseite der Hybridrasentragschicht; und
d) Wachsen des natürlichen Rasens, um natürliche Rasenfasern bereitzustellen, die sich mit den Naturfasern in der Hybridrasentragschicht vermischen, um den Hybridrasen zu bilden.

In einer weiteren bevorzugten Ausführungsform ist die Hybridrasentragschicht eine Hybridrasentragschicht nach DIN 18015.

Ferner bezieht sich die vorliegende Erfindung insbesondere auf Hybridrollrasensysteme (Hybridrollrasen) umfassend eine Hybridrasentragschicht der vorliegenden Beschreibung und Naturrasen. Insbesondere befindet sich zwischen der Hybridrasentragschicht und dem Naturrasen ein Rasenfilz.

In den Zeichnungen ist die Erfindung insbesondere in einem Ausführungsbeispiel schematisch dargestellt. Es zeigen:
Fig. 1 eine geschnittene Ansicht einer ersten Ausführungsform eines erfindungsgemäßen Rollrasens umfassend eine Hybridrasentragschicht, wie in der vorliegenden Anmeldung beschrieben, und Naturrasen, wobei sich zwischen der Hybridrasentragschicht und dem Naturrasen ein Rasenfilz befindet.

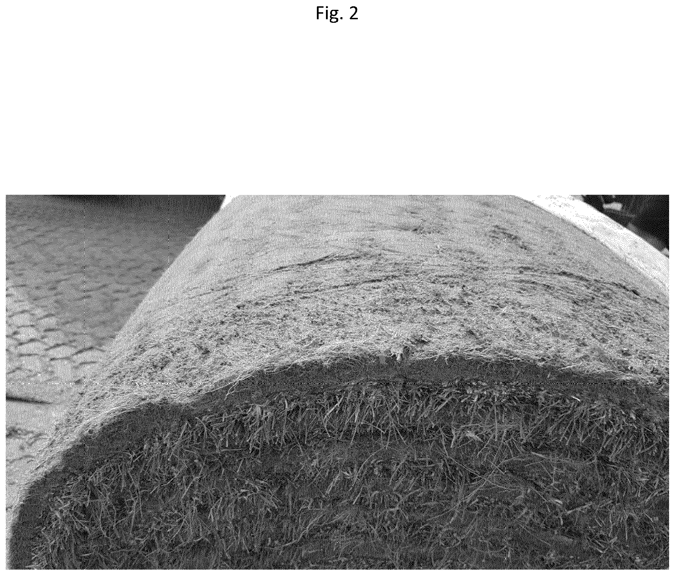

Fig. 2 Großrollen einer Ausführungsform des erfindungsgemäßen Hybridrollrasens umfassend eine Hybridrasentragschicht

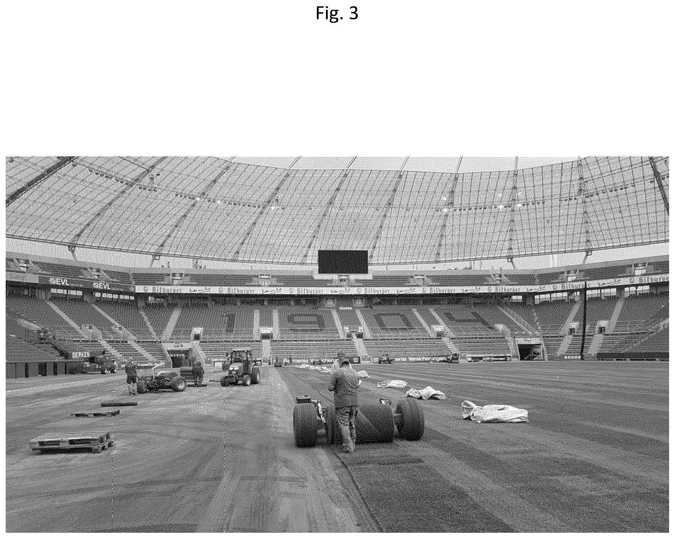

Fig. 3 wie Großrollen einer Ausführungsform des erfindungsgemäßen Hybridrollrasens umfassend eine Hybridrasentragschicht als Dicksode verlegt werden.

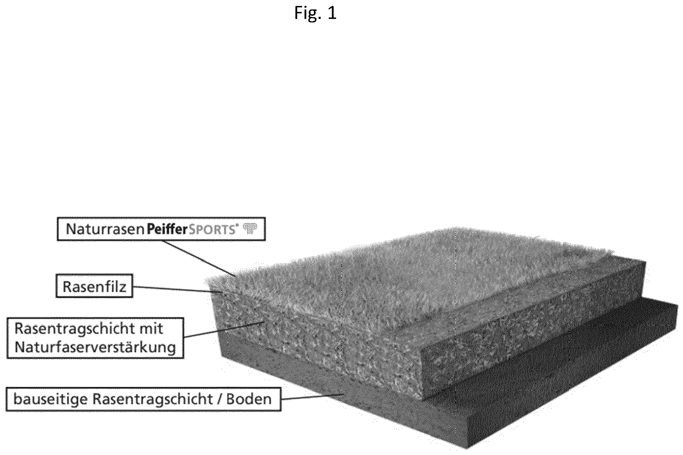

Fig. 1 zeigt eine geschnittene Ansicht einer ersten Ausführungsform eines erfindungsgemäßen Hybridrollrasensystems. Die Basis des gezeigten Hybridrollrasens ist die erfindungsgemäße Hybridrasentragschicht, die als Rasentragschicht mit Naturverstärkung auf der bauseitigen Rasentragschicht bzw. dem Boden aufliegt. Unter dem Boden ist hier jeder Untergrund zu verstehen, der natürlicherweise an der Stelle vorherrscht oder bereits vorhanden ist, an der der Hybridrollrasen angelegt werden soll. Dieser Boden wird vor dem Aufbau des Hybridrollrasens eingeebnet und unter Umständen nach Bedarf anderweitig vorbehandelt, beispielsweise verdichtet, so dass er einen guten Untergrund für die darauffolgende Hybridrasentragschicht bildet.

Die Hybridrasentragschicht befindet sich, wie in Fig. 1 zu sehen ist, auf dem Boden. Oberhalb der Hybridrasentragschicht wiederum befindet sich der Rasen. Die Wurzeln eines von einem Naturrasen gebildeten Rasens befinden sich, zumindest zum größten Teil, innerhalb der Hybridrasentragschicht. Im Bereich des Rasens findet der direkte Kontakt der Sportler mit dem Hybridrollrasen statt In dieser Ausführungsform befindet sich zwischen dem Naturrasen und der Hybridrasentragschicht ein Rasenfilz. Rasenfilz ist eine verfilzte Schicht aus abgestorbenem Gras, toten Wurzeln und anderen Substanzen, die sich mit der Zeit im Gras ansammeln. Rasenfilz ist keineswegs ungewöhnlich, sondern bildet sich über kurz oder lang auf den meisten Rasen. Er bildet sich auf der Höhe des Erdbodens und verflechtet sich mit den Grashalmen. Wenn der Zersetzungszyklus aus irgendeinem Grund verzögert wird, beginnen sich abgestorbene Pflanzenreste anzusammeln.

## Patentansprüche

1. Eine Hybridrasentragschicht zur Verwendung mit Naturrasen zur Bildung eines stabilen Hybridrollrasensystems, wobei die Hybridrasentragschicht umfasst:
(a) Bodengrundsubstanz umfassend Boden, Sand und weitere Zuschlagsstoffe;
(b) eine Vielzahl von Naturfasern ausgewählt aus der Gruppe bestehend aus Kokos, Kenaf, Bagasse und Bambus, oder Gemische davon, wobei der Anteil der Naturfasern an der Hybridrasentragschicht zwischen 3 bis 10 Gewichts-%, insbesondere zwischen 3 bis 8 Gewichts-% beträgt,
wobei die Schichtdicke der Hybridrasentragschicht zwischen 20 mm und 70 mm, insbesondere zwischen 30 mm und 60 mm, bevorzugt zwischen 30 mm bis 50 mm liegt.

2. Hybridrasentragschicht nach Anspruch 1, **dadurch gekennzeichnet, dass** die Hybridrasentragschicht Quarzsand und/oder Natursand und/oder Lava und/oder Oberboden und/oder Torf und/oder Naturkork aufweist.

3. Hybridrasentragschicht nach einem der vorhergehenden Ansprüche, **dadurch gekennzeichnet, dass** die Hybridrasentragschicht keine nicht biologisch abbaubaren Fasern enthält.

4. Hybridrasentragschicht nach einem der vorhergehenden Ansprüche, **dadurch gekennzeichnet, dass** die Bodengrundsubstanz Oberboden, Sand und/oder Lava umfasst.

5. Hybridrasentragschicht nach einem der vorhergehenden Ansprüche, **dadurch gekennzeichnet, dass** die Hybridrasentragschicht eine Hybridrasentragschicht nach DIN 18015 ist.

6. Verfahren zur Herstellung einer Hybridrasentragschicht nach einem der Ansprüche 1 bis 5 umfassend die Verfahrensschritte:
(a) Herstellen einer Hybridrasentragschicht umfassend Boden, Sand und weitere Zuschlagsstoffe;
(b) Homogenes Vermischen der Hybridrasentragschicht aus Schritt a) mit einer Vielzahl von Naturfasern ausgewählt aus der Gruppe bestehend aus Kokos, Kenaf, Bagasse und Bambus, oder Gemische davon.

7. Verfahren zur Herstellung einer Hybridrasentragschicht nach Anspruch 6, **dadurch gekennzeichnet, dass** der Anteil der Naturfasern an der Hybridrasentragschicht zwischen 1 bis 10 Gewichts-%, insbesondere zwischen 3 bis 8 Gewichts-% beträgt und wobei die Schichtdicke der Hybridrasentragschicht zwischen 20 mm und 70 mm, insbesondere zwischen 30 mm und 60 mm, bevorzugt zwischen 30 mm bis 50 mm liegt.

8. Verfahren zur Herstellung von Hybridrollrasen, wobei das Verfahren umfasst:
a) Erzeugen einer Hybridrasentragschicht nach einem der Ansprüche 1 bis 5 und/oder nach dem Verfahren nach Anspruch 6 oder 7,
b) Gleichmäßiges Ausbringen der Hybridrasentragschicht in gleichmäßiger Stärke und einplanieren auf einer Schicht aus Sand oder Erde oder einer Mischung davon;
c) Hinzufügen von Naturrasensamen wie Naturgrassamen, einer Sportrasensamenmischung und/oder einer Wiesenrispeneinsaat auf die Oberseite der Hybridrasentragschicht; und
d) Wachsen des natürlichen Rasens, um natürliche Rasenfasern bereitzustellen, die sich mit den Naturfasern in der Hybridrasentragschicht vermischen, um den Hybridrasen zu bilden.

9. Verfahren nach einem der vorhergehenden Ansprüche, **dadurch gekennzeichnet, dass** die Hybridrasentragschicht eine Hybridrasentragschicht nach DIN 18015 ist.

10. Hybridrollrasensystem umfassend eine Hybridrasentragschicht nach einem der Ansprüche 1 bis 5 und Naturrasen.

11. Hybridrollrasensystem nach Anspruch 10, wobei sich zwischen der Hybridrasentragschicht und dem Naturrasen ein Rasenfilz befindet.
